# EUROPÄISCHE PATENTANMELDUNG

(11) **EP 4 623 667 A1**
(43) Veröffentlichungstag der Anmeldung: **01.10.2025**
(21) Anmeldenummer: 25155464.8
(22) Anmeldetag: 03.02.2025
(51) Int. Cl.: A01D 41/14, A01D 75/18, A01F 12/16, A01F 15/10

(54) **LANDWIRTSCHAFTLICHE ERNTEMASCHINE**

(30) Priorität: 27.03.2024 DE 102024108696
(71) Anmelder: CLAAS Selbstfahrende Erntemaschinen GmbH, 33428 Harsewinkel (DE)
(72) Erfinder: Miller, Samuel, 88416 Steinhausen (DE); Reinhardt, Martin, 88367 Hohentengen (DE); Fischer, Josef, 88400 Biberach (DE)
(74) Vertreter: CLAAS Gruppe

(57) **Zusammenfassung**

Die vorliegende Erfindung betrifft eine landwirtschaftliche Erntemaschine (1), umfassend eine in einem Einzuggehäuse angeordnete Einzugvorrichtung (9), ein an dem Einzuggehäuse angeordnetes Vorsatzgerät (2) zur Aufnahme von Erntegut, wobei das Vorsatzgerät (2) ein einen Erntegutfluss begrenzendes Gehäuse (7) mit einem Bodensegment (20) aufweist, sowie zumindest ein der Einzugvorrichtung (6) nachgeordnetes Arbeitsaggregat (10), wobei dem Vorsatzgerät (2) eine Fremdkörperdetektionseinrichtung (15) zugeordnet ist, welche dazu ausgeführt und eingerichtet ist, Fremdkörper (FK) im Gutstrom innerhalb des Vorsatzgerätes (2) zu detektieren, wobei das Vorsatzgerät (2) eine fremdkraftbetätige Abscheidevorrichtung (22) zur Ausschleusung des detektieren Fremdkörpers (FK) umfasst.

## Beschreibung

Die vorliegende Erfindung betrifft eine landwirtschaftliche Erntemaschine gemäß dem Oberbegriff des Anspruches 1

Aus der EP 1 632 128 A1 ist eine als Feldhäcksler ausgeführte landwirtschaftliche Erntemaschine bekannt, die eine in einem Einzuggehäuse angeordnete Einzugvorrichtung, ein an dem Einzuggehäuse angeordnetes Vorsatzgerät zur Aufnahme von Erntegut sowie zumindest ein der Einzugvorrichtung nachgeordnetes Arbeitsaggregat umfasst. Um eine Beschädigung des der Einzugvorrichtung nachgeordneten Arbeitsaggregates durch einen in der Einzugvorrichtung detektierten Fremdkörper zu vermeiden, ist eine Vorrichtung zum Auslösen eines Stillstands der Einzugvorrichtung vorgesehen. Hierdurch soll die Weiterförderung des Fremdkörpers in das nachgeordnete Arbeitsaggregat unterbunden werden.

Nachteilig am vorstehend genannten Stad der Technik ist, dass der Fremdkörper die Einzugvorrichtung erreichen und zumindest teilweise passieren muss, um detektiert zu werden. Der Fremdkörper wird gemäß der EP 1 632 128 A1 erst erkannt, wenn dieser zumindest das vordere Einzugwalzenpaar passiert hat, was zu einer Beschädigung der Einzugwalzen führen kann. Ein weiterer Aspekt ist, dass ein Reversieren des Antriebes erforderlich ist, um den Fremdkörper zusammen mit dem Erntegut aus der Einzugvorrichtung in Richtung des Vorsatzgerätes zu fördern, um diesen dann entfernen zu können.

Ausgehend vom vorstehend genannten Stand der Technik liegt der Erfindung die Aufgabe zugrunde, eine landwirtschaftliche Erntemaschine der eingangs genannten Art weiterzubilden, welche sich durch verkürzte Standzeiten aufgrund von durch die Erntemaschine aufgenommenen Fremdkörpern auszeichnet.

Diese Aufgabe wird erfindungsgemäß durch eine landwirtschaftliche Erntemaschine mit den Merkmalen des Anspruches 1 gelöst. Vorteilhafte Weiterbildungen sind Gegenstand der abhängigen Ansprüche.

Gemäß dem Anspruch 1 wird eine landwirtschaftliche Erntemaschine vorgeschlagen, die eine in einem Einzuggehäuse angeordnete Einzugvorrichtung, ein an dem Einzuggehäuse angeordnetes Vorsatzgerät zur Aufnahme von Erntegut, wobei das Vorsatzgerät ein einen Erntegutfluss begrenzendes Gehäuse mit einem Bodensegment aufweist, sowie zumindest ein der Einzugvorrichtung nachgeordnetes Arbeitsaggregat umfasst. Erfindungsgemäß ist vorgesehen, dass dem Vorsatzgerät eine Fremdkörperdetektionseinrichtung zugeordnet ist, welche dazu ausgeführt und eingerichtet ist, Fremdkörper, insbesondere nichtmetallische Fremdkörper, im Gutstrom innerhalb des Vorsatzgerätes zu detektieren, wobei das Vorsatzgerät eine fremdkraftbetätige Abscheidevorrichtung zur Ausschleusung des detektieren Fremdkörpers umfasst.

Wesentlich ist dabei die Überlegung, dass durch Ausschleusen des Fremdkörpers bereits vor dem Erreichen der Einzugvorrichtung eine mögliche Beschädigung der Einzugvorrichtung sowie des der zumindest einen Einzugvorrichtung nachgeordneten Arbeitsaggregates vermieden werden kann. Zudem kann durch die Ausschleusung die Standzeit der Erntemaschine signifikant verringert werden, da durch die Detektion des Fremdkörpers im Vorsatzgerät und das Ausschleusen aus dem Vorsatzgerät ein Reversieren der Einzugvorrichtung entfallen kann. Mit dem Wegfall des Reversierens kann auch das damit verbundene Freiräumen entfallen.

Die Fremdkörperdetektionseinrichtung kann bevorzugt eine Recheneinheit und eine Speichereinheit umfassen.

Insbesondere kann die Abscheidevorrichtung passiv durch den auszuschleusenden Fremdkörper oder aktiv durch zumindest einen Aktuator betätigbar sein. Die passive Betätigung der Abscheidevorrichtung kann durch die Gewichtskraft des auszuschleusenden Fremdkörpers bewirkt werden. Eine aktive Betätigung der Abscheidevorrichtung durch den zumindest einen Aktuator wird in Abhängigkeit von der Detektion des Fremdkörpers durch die Fremdkörperdetektionseinrichtung initiiert.

Bevorzugt kann die Abscheidevorrichtung zumindest ein im Bodensegment angeordnetes Verschlusselement umfassen, welches dazu eingerichtet ist, sich zwischen zwei Positionen zu bewegen, in welchen das zumindest eine Verschlusselement zumindest eine Ausschleuseöffnung freigibt oder verschließt. Hierbei kann das Verschlusselement einteilig und sich im Wesentlichen über die Breite des Bodensegmentes erstreckend ausgeführt sein. Somit kann sich die Ausschleuseöffnung im Wesentlichen über die Breite des Bodensegmentes erstrecken.

Alternativ können mehrere einzelne Verschlusselement nebeneinander angeordnet sein. Insbesondere können die einzelnen Verschlusselemente voneinander unabhängig zwischen den zwei Positionen bewegbar sein, so dass die zumindest eine Ausschleuseöffnung zum Ausschleusen des Fremdkörpers nur einen Teil des Bodensegmentes freigibt. Dies hat den Vorteil, dass der Anteil an mit dem Fremdkörper ausgeschleusten Erntegut minimiert werden kann. Weiterhin können die Breite des Bodensegmentes verteilt an zwei oder mehr Stellen Ausschleuseöffnungen durch die einzelnen Verschlusselemente freigegeben werden.

Das zumindest eine Verschlusselement kann als ein klappenförmiges Bauteil ausgeführt sein, welches bezüglich einer Drehachse positionsveränderbar ist. Das zumindest eine Verschlusselement um eine Drehachse schwenkbar angeordnet sein. Dazu kann das zumindest eine Verschlusselement an der Drehachse angelenkt sein. Alternativ kann das zumindest eine Verschlusselement mittels eines Viergelenkes oder eines Parallelgramms um die Drehachse schwenkbar sein.

Das zumindest eine Verschlusselement kann dazu ausgeführt und angeordnet sein, dass es die zumindest eine Ausschleuseöffnung in Bewegungsrichtung oder entgegen der Bewegungsrichtung der Erntemaschine freigibt.

Gemäß einer Weiterbildung kann das zumindest eine Verschlusselement durch zumindest ein Federelement mit einer Vorspannkraft beaufschlagt sein, um das zumindest eine Verschlusselement in seiner die zumindest eine Ausschleuseöffnung verschließenden Position zu halten. Diese Ausführungsform sieht eine passive Betätigung der Abscheidevorrichtung durch den auszuschleusenden Fremdkörper vor. Sind mehrere Verschlusselemente vorgesehen, um die zumindest eine Ausschleuseöffnung zu verschließen bzw. anteilig freizugeben, kann jedes der Verschlusselemente durch ein Federelement mit einer Vorspannkraft beaufschlagt sein.

Insbesondere kann das zumindest eine Federelement als ein mechanisches oder pneumatisches Federelement ausgeführt sein. Mittels eines pneumatischen Federelementes kann die Vorspannkraft eingestellt und an bestehende Arbeitsbedingungen angepasst werden.

Alternativ kann das zumindest eine Verschlusselement zumindest abschnittsweise aus einem verformbaren, insbesondere elastisch verformbaren, Material ausgebildet und dazu eingerichtet sein, sich zum Freigeben und Schließen der zumindest einen Ausschleuseöffnung zu verformen. Gemäß dieser Ausführungsform bildet das zumindest eine Verschlusselement zugleich das Federelement. Das zumindest eine Verschlusselement kann beispielsweise aus einem Federstahl oder einem anderen elastisch verformbaren Material bestehen. Wesentlich ist, dass die Verformung des zumindest einen Verschlusselementes reversibel ist. Bevorzugt können mehrere Verschlusselemente nebeneinander angeordnet sein, wobei diese unabhängig voneinander durch den Fremdkörper betätigbar sind, so dass zumindest eine Ausschleuseöffnung freigegeben wird, die sich nur teilweise über die Breite des Bodensegmentes erstreckt. Insbesondere wird die zumindest eine Ausschleuseöffnung im Wesentlichen nur über die Breite des auszuschleusenden Fremdkörpers durch die Betätigung einzelner Verschlusselemente freigegeben.

Bei einer Ausführung, gemäß der die Abscheidevorrichtung aktiv durch zumindest einen Aktuator betätigbar ist, kann der die Abscheidevorrichtung betätigende Aktuator als elektromechanischer, hydraulischer oder pneumatischer Aktor ausgeführt sein. Insbesondere kann der Aktuator als Hydraulikzylinder, Pneumatikzylinder, Linearmotor oder Elektromotor ausgeführt sein. Der zumindest eine Aktuator betätigt das zumindest eine Verschlusselement der Abscheidevorrichtung, um dieses zum Ausschleusen des detektierten Fremdkörpers aus seiner die zumindest eine Ausschleuseöffnung verschließenden Position temporär in die die zumindest eine Ausschleuseöffnung freigebende Position zu überführen.

Die durch den zumindest einen Aktuator aktiv betätigbare Abscheidevorrichtung kann zudem mit einem Überlastschutz ausgeführt sein. Dabei kann der Überlastschutz passiv ausgeführt sein, beispielsweise als Druckregelventil, insbesondere Druckbegrenzungsventil, oder als ein eine Vorspannung erzeugender Druckspeicher des zumindest einen Aktuators.

Insbesondere kann das Verschlusselement einteilig und sich im Wesentlichen über die Breite des Bodensegmentes erstreckend ausgeführt sein. Alternativ können mehrere einzelne Verschlusselemente nebeneinander angeordnet sein, die vorzugsweise voneinander unabhängig betätigbar sind. Insbesondere können durch die Aktuatoren die einzelnen Verschlusselemente voneinander unabhängig zwischen den zwei Positionen bewegbar sein, so dass die Ausschleuseöffnung zum Ausschleusen des Fremdkörpers nur teilweise freigeben wird.

Bevorzugt kann an einem dem zumindest einen Verschlusselement gegenüberliegenden Abschnitt des Gehäuses eine Ausstoßvorrichtung angeordnet sein, welche auf den Fremdkörper einwirkt. Hierdurch kann der Prozess des Ausschleusens unabhängig von einer aktiven oder passiven Betätigung des zumindest einen Verschlusselementes unterstützt werden.

Insbesondere kann die Ausstoßvorrichtung zumindest einen Linearaktor umfassen, der eine in Richtung des zumindest einen Verschlusselementes gerichtete Bewegung ausführt. Dabei kann vorgesehen sein, dass die von der Ausstoßvorrichtung zurücklegbare Wegstrecke derart gewählt ist, dass ein unmittelbarer Kontakt zwischen dem einen Verschlusselement und der Ausstoßvorrichtung vermieden wird. Die maximal zurücklegbare Wegstrecke der Ausstoßvorrichtung ist durch das Erreichen der zumindest einen Ausschleuseöffnung begrenzt. Hierdurch soll eine Beschädigung des zumindest einen Verschlusselementes vermieden werden. Zudem kann dadurch die Menge an Erntegut, die zugleich mit dem Fremdkörper durch die zumindest eine Ausschleuseöffnung ausgeschleust wird, reduziert werden.

Bevorzugt kann die Ausstoßvorrichtung zumindest eine Zinkenreihe aufweisen, welche sich im Wesentlichen über die Breite des Gehäuses erstreckt. Die Ausführung der Ausstoßvorrichtung mit zumindest einer Zinkenreihe hat den Vorteil, dass die einzelnen Zinken das Erntegut durchstoßen können, wodurch der Anteil an Erntegut, welches mit dem Fremdkörper ausgeschleust wird, minimiert werden kann. Dies ist besonders vorteilhaft, wenn mehrere Verschlusselemente, unabhängig von einer passiven oder aktiven Betätigung des zumindest einen Verschlusselementes, vorgesehen sind, die unabhängig voneinander betätigbar sind, um eine im Wesentlichen auf die Größe des auszuschleusenden Fremdkörpers begrenzte Ausschleuseöffnung freizugeben. Es kann bevorzugt vorgesehen sein, dass zwei oder mehr Zinkenreihen hintereinander angeordnet sind.

Gemäß einer bevorzugten Weiterbildung kann dem zumindest einen Verschlusselement zumindest eine Sensoreinheit zugeordnet sein, welche zur Detektion einer Positionsänderung des zumindest einen Verschlusselementes eingerichtet ist. Die Erfassung der Positionsänderung des zumindest einen Verschlusselementes kann durch die Recheneinheit der Fremdkörperdetektionseinrichtung ausgewertet werden, indem die zumindest eine Sensoreinheit entsprechende Sensorsignale zur Auswertung an die Recheneinheit überträgt.

Gemäß einer bevorzugten Weiterbildung kann die Fremdkörperdetektionseinrichtung dazu ausgeführt und eingerichtet sein, eine Detektion eines Fremdkörpers und/oder eine Betätigung des zumindest eine Verschlusselementes georeferenziert aufzuzeichnen. Nach der erfolgten Bearbeitung des Feldes lässt sich auf diese Weise das spätere Auffinden der ausgeschleusten Fremdkörper vereinfachen.

Eine Weiterbildung sieht vor, dass unterhalb der zumindest einen Ausschleuseöffnung eine Mulde zum Auffangen von Fremdkörpern angeordnet ist. Bevorzugt erstreckt sich die Mulde im Wesentlichen über die Breite des Bodensegmentes.

Bevorzugt kann die Fremdkörperdetektionseinrichtung zumindest einen Sensor aufweisen, der als Mikrofon und/oder Körperschallsensor ausgeführt ist. Mittels des zumindest einen als Mikrofon und/oder Körperschallsensor ausgeführten Sensors lassen sich Geräusche, d.h. akustische Signale, die der Fremdkörper beim Auftreffen auf ein Bauteil oder einen längeren physischen Kontakt mit einem Bauteil des Vorsatzgerätes, beispielsweise durch Gleiten entlang einer Oberfläche des Bauteils, erzeugt und vom Bauteil und/oder über die Luft übertragen werden, erfassen und durch die Fremdkörperdetektionseinrichtung analysieren.

Insbesondere kann der zumindest eine Sensor an und/oder in einem Bauteil des Vorsatz-gerätes angeordnet sein, wobei das Bauteil als Resonanzkörper dienen kann. Das Bauteil als Resonanzkörper kann eine vorteilhafte Verstärkung des akustischen Signals bewirken, so dass die Detektion des Auftretens des Fremdkörpers im Vorsatzgerät verbessert werden kann. Eine Anordnung des zumindest einen Sensors in einem Bauteil des Vorsatzgerätes bietet darüber hinaus den Vorteil des Schutzes des zumindest einen Sensors vor Verschmutzung, Feuchtigkeit und/oder mechanischen Beschädigungen. Ein weiterer Vorteil der Anordnung des zumindest einen Sensors in einem Bauteil des Vorsatzgerätes ist die Abschirmung oder zumindest Dämpfung von Umgebungsgeräuschen, die Einfluss auf die Auswertung der erfassten akustischen Signale haben können.

Gemäß einer Weiterbildung kann der zumindest eine Sensor außenseitig am Gehäuse und/oder am Rahmen des Vorsatzgerätes angeordnet sein.

Gemäß einer Weiterbildung kann der zumindest eine Sensor an dem Bodensegment des Vorsatzgerätes angeordnet sein, wobei das Bodensegment im Wesentlichen plattenförmig und/oder als Hohlkörper ausgebildet sein kann. Die Ausgestaltung des Bodensegmentes als insbesondere plattenförmiger Hohlkörper vereint die Vorteile des Bauteiles als Resonanzkörper, an dem der zumindest eine Sensor angeordnet ist und die der Integration des zumindest einen Sensors in das Bauteil, wenn der zumindest eine Sensor in dem Bodensegment angeordnet ist.

Bevorzugt können mehrere Sensoren zueinander räumlich beabstandet entlang des Gutflussverlaufes an und/oder in dem Vorsatzgerät angeordnet sein, um den Fremdkörper zeitlich versetzt zu detektieren. Hierdurch kann zum einen die Wahrscheinlichkeit einer Detektion eines vom Vorsatzgerät aufgenommenen Fremdkörpers erhöht werden. Zum anderen lässt sich die Genauigkeit der Bestimmung der Art des Fremdkörpers verbessern, wenn dieser mehrfach detektiert wird.

Insbesondere kann das Vorsatzgerät beispielsweise als Aufnahmevorrichtung für einen Feldhäcksler, einen Mähdrescher, einen Ladewagen oder eine Ballenpresse ausgeführt sein, eine sogenannte Pick-up. Weiterhin kann das Vorsatzgerät als Mähwerk oder als Maisgebiss für einen Feldhäcksler ausgeführt sein.

Die vorliegende Erfindung wird nachstehend anhand von in den Zeichnungen dargestellten Ausführungsbeispielen näher erläutert.

Es zeigen:
- Fig. 1: schematisch und exemplarisch eine Teilansicht einer landwirtschaftlichen Erntemaschine mit einem daran angeordneten Vorsatzgerät mit einer passiv betätigbaren Abscheidevorrichtung;
- Fig. 2: schematisch und exemplarisch eine Teilansicht der landwirtschaftlichen Erntemaschine gemäß Fig. 1 mit einer aktiv betätigbaren Abscheidevorrichtung;
- Fig. 3: schematisch und exemplarisch eine Teilansicht der landwirtschaftlichen Erntemaschine gemäß Fig. 1 mit einer die passiv betätigbare Abscheidevorrichtung unterstützenden Ausstoßvorrichtung;
- Fig. 4: schematisch und exemplarisch eine stark vereinfachte Darstellung des Vorsatzgerätes mit aktiv betätigbarer Abscheidevorrichtung;
- Fig. 5: schematisch und exemplarisch eine stark vereinfachte Darstellung des Vorsatzgerätes mit passiv betätigbarer Abscheidevorrichtung; und
- Fig. 6: schematisch und exemplarisch eine stark vereinfachte Darstellung des Vorsatzgerätes mit passiv betätigbarer Abscheidevorrichtung gemäß einer Ausführungsform.

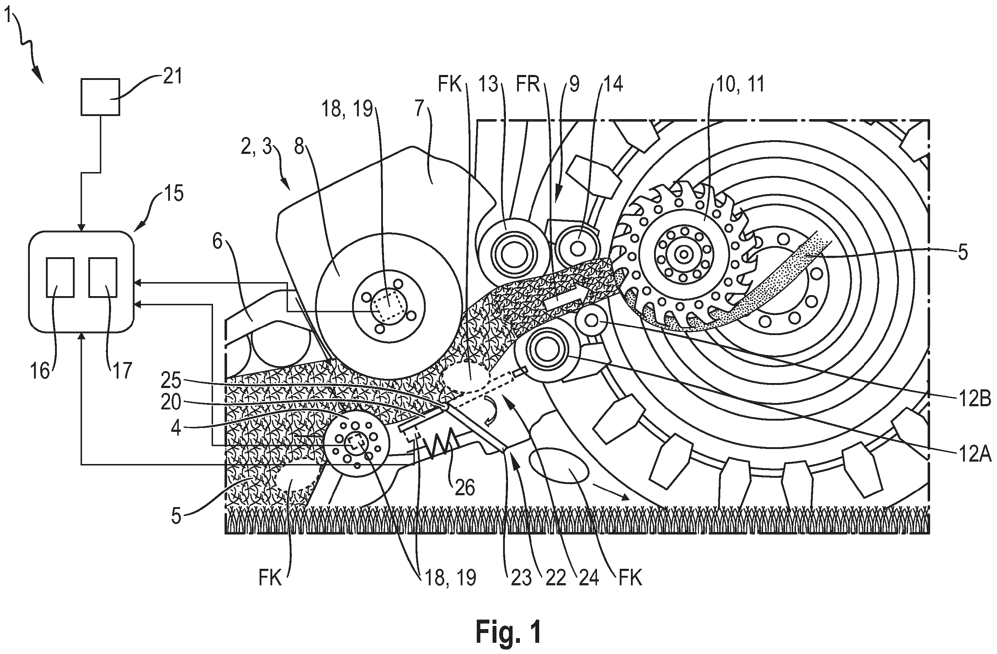

In Fig. 1 ist schematisch und exemplarisch eine Teilansicht einer landwirtschaftlichen Erntemaschine 1 mit einem daran angeordneten Vorsatzgerät 2 dargestellt. Die Erntemaschine 1 ist hier und vorzugsweise als selbstfahrender Feldhäcksler ausgeführt. Das Vorsatzgerät 2 ist hier und vorzugsweise als Aufnahmevorrichtung 3 ausgeführt. Das als Aufnahmevorrichtung 3 ausgeführte Vorsatzgerät 2 kann auch an einer als Ballenpresse oder einem als Ladewagen ausgeführten landwirtschaftlichen Erntemaschine 1 angeordnet sein.

Das Vorsatzgerät 2 ist an einem nicht dargestellten Einzuggehäuse einer Einzugvorrichtung 9 der Erntemaschine 1 angeordnet.

Die Aufnahmevorrichtung 3 umfasst eine Aufsammeltrommel 4 zum Aufsammeln von am Boden liegendem Erntegut 5, einen Erntegutkanal, der das aufgesammelte Erntegut 5 aufnimmt, der durch einen Niederhalter 6 begrenzt ist. Die Weite des Erntegutkanals ist durch Verstellen des Niederhalters 6 veränderbar. Der Erntegutfluss ist durch ein - lediglich angedeutetes - Gehäuse 7 des Vorsatzgerätes 2 begrenzt. Das von dem als Aufnahmevorrichtung 3 ausgeführten Vorsatzgerät 2 aufgenommene Erntegut 5 wird durch eine Förderschnecke 8 der Einzugvorrichtung 9 der Erntemaschine 1 zugeführt.

Im unteren Bereich des Einzuggehäuses der Einzugvorrichtung 9 sind ortsfeste Einzugwalzen 12A, 12B angeordnet. Im oberen Bereich des Einzuggehäuses sind eine vordere Presswalze 13, nachfolgend auch als Vorpresswalze bezeichnet, und eine hintere Presswalze 14 angeordnet. Die Vorpresswalze 13 ist in Förderrichtung FR gesehen vor der Presswalze 14 angeordnet. Der Vorpresswalze 13 und der Presswalze 14 gegenüberliegend sind die ortsfesten Einzugwalzen 12A, 12B angeordnet. Der Einzugvorrichtung 9 ist ein als rotierend abgetriebene Häckseltrommel 11 ausgeführtes Arbeitsaggregat 10 nachgeordnet.

Dem Vorsatzgerät 2 ist eine Fremdkörperdetektionseinrichtung 15 zugeordnet, welche dazu ausgeführt und eingerichtet ist, einen Fremdkörper FK im aufgenommenen Erntegut 5 innerhalb des Vorsatzgerätes 2 zu detektieren. Die Fremdkörperdetektionseinrichtung 15 umfasst eine Recheneinheit 16 und eine Speichereinheit 17. Weiterhin weist die Fremdkörperdetektionseinrichtung 15 zumindest einen Sensor 18 aufweist, der als Mikrofon 19 und/oder Körperschallsensor ausgeführt ist.

Mittels des zumindest einen als Mikrofon 19 und/oder Körperschallsensor ausgeführten Sensors 18 lassen sich Geräusche, d.h. akustische Signale, die der Fremdkörper FK beim Auftreffen auf ein Bauteil oder einen längeren physischen Kontakt mit einem Bauteil des Vorsatzgerätes 2, beispielsweise durch Gleiten entlang einer Oberfläche des Bauteils, erzeugt und vom Bauteil und/oder über die Luft übertragen werden, erfassen und durch die Fremdkörperdetektionseinrichtung 15 analysieren. Bauteile sind insbesondere die Aufsammeltrommel 4, der Niederhalter 6 bzw. die daran angeordneten Niederhalterrollen, die Förderschnecke 8 sowie das Gehäuse 7 des Vorsatzgerätes 2 respektive der Aufnahmevorrichtung 3.

Insbesondere kann der zumindest eine Sensor 18 an und/oder in einem Bauteil des Vorsatzgerätes 2 angeordnet sein, wobei das Bauteil als Resonanzkörper dienen kann. Das Bauteil als Resonanzkörper kann eine vorteilhafte Verstärkung des durch den Fremdkörper FK generierten akustischen Signals bewirken, so dass die Detektion des Auftretens des Fremdkörpers FK im Vorsatzgerät 2 verbessert werden kann. Eine Anordnung des zumindest einen Sensors 18 in einem Bauteil des Vorsatzgerätes 2 bietet darüber hinaus den Vorteil des Schutzes des zumindest einen Sensors 18 vor Verschmutzung, Feuchtigkeit und/oder mechanischen Beschädigungen. So kann beispielsweise eine Anordnung des zumindest einen Sensors 18 im Inneren der Aufsammeltrommel 4 und/oder der Förderschnecke 8 vorgesehen sein.

Ein weiterer Vorteil der Anordnung des zumindest einen Sensors 18 in einem Bauteil des Vorsatzgerätes 2 ist die Abschirmung oder zumindest Dämpfung von Umgebungsgeräuschen, die Einfluss auf die Auswertung der erfassten akustischen Signale haben können.

Gemäß einer Weiterbildung kann der zumindest eine Sensor 18 außenseitig am Gehäuse 7 und/oder am Rahmen des Vorsatzgerätes 2 angeordnet sein.

Weiterhin kann der zumindest eine Sensor 18 an oder in einem Bodensegment 20 des Vorsatzgerätes 2 angeordnet sein, wobei das Bodensegment 20 im Wesentlichen plattenförmig und/oder als Hohlkörper ausgebildet sein kann. Die Ausgestaltung des Bodensegmentes 20 als insbesondere plattenförmiger Hohlkörper vereint die Vorteile des Resonanzkörpers als Bauteil, an dem der zumindest eine Sensor 18 angeordnet ist und die der Integration des zumindest einen Sensors 18 in das Bauteil, wenn der zumindest eine Sensor 18 im Bodensegment 20 angeordnet ist.

Insbesondere können mehrere Sensoren 18 zueinander räumlich beabstandet nebeneinander an und/oder in dem Vorsatzgerät 2 angeordnet sein. Dadurch kann eine räumliche Detektion des Fremdkörpers FK erreicht werden, wodurch eine Vereinfachung der Lokalisierung des Fremdkörpers FK durch einen Bediener der Erntemaschine 1 ermöglicht wird. Die Anordnung mehrerer Sensoren 18 zur Bestimmung der Position des Fremdkörpers FK quer zur Fahrtrichtung FR nebeneinander kann symmetrisch oder asymmetrisch vorgesehen sein.

Insbesondere kann die Fremdkörperdetektionseinrichtung 15 dazu eingerichtet sein, die akustisch bestimmte Lage des Fremdkörpers FK im Erntegut als Information mittels einer Benutzerschnittstelle an eine Bedienperson auszugeben. Bevorzugt kann die Information der räumlichen Lage des Fremdkörpers FK durch die Benutzerschnittstelle visualisiert werden.

Bevorzugt können mehrere Sensoren 18 zueinander räumlich beabstandet entlang des Gutflussverlaufes an und/oder in dem Vorsatzgerät 2 angeordnet sein, um den Fremdkörper FK zeitlich versetzt zu detektieren. Hierdurch kann zum einen die Wahrscheinlichkeit einer Detektion eines vom Vorsatzgerät 2 aufgenommenen Fremdkörpers FK erhöht werden. Zum anderen lässt sich die Genauigkeit der Bestimmung der Art des Fremdkörpers FK verbessern, wenn dieser mehrfach detektiert wird.

Die Fremdkörperdetektionseinrichtung 15 ist dazu ausgeführt und eingerichtet, eine Detektion und Ausschleusung eines Fremdkörpers FK im Erntegut 5 georeferenziert aufzuzeichnen. Hierzu steht die Fremdkörperdetektionseinrichtung 15 mit einem Positionsortungssensor 21 signaltechnisch in Verbindung. Bevorzugt ist der Positionsortungssensor 21 der Erntemaschine 1 zugeordnet. Alternativ oder zusätzlich ist eine Anordnung des Positionsortungssensors 21 am Vorsatzgerät 2 denkbar.

Als Reaktion auf die Detektion des Fremdkörpers FK im Vorsatzgerät 2 ist vorgesehen, dass dieser durch eine Abscheidevorrichtung 22 am Vorsatzgerät 2 ausgeschleust wird. Das Ausschleusen des Fremdkörpers FK erfolgt dabei ohne eine Unterbrechung des Erntevorgangs.

Somit kann zum einen verhindert werden, dass der Fremdkörper FK in die Einzugvorrichtung 9 gelangt. Zum anderen lässt sich dadurch eine Stillstandzeit der Erntemaschine 1 vermeiden, welche ansonsten durch Reversieren zumindest der Einzugvorrichtung 9 erforderlich wird, um den Fremdkörper FK aus der Einzugvorrichtung 9 oder dem Vorsatzgerät heraus zu fördern.

Die Abscheidevorrichtung 22 ist zur Ausschleusung des detektieren Fremdkörpers FK fremdkraftbetätigt. Dazu kann die Abscheidevorrichtung 22 passiv durch den auszuschleusenden Fremdkörper FK betätigbar sein, wie in Fig. 1 schematisch dargestellt. Durch die Gewichtskraft des Fremdkörpers FK wird die passiv betätigbare Abscheidevorrichtung 22 betätigt, um diesen auszuschleusen.

Die Abscheidevorrichtung 22 umfasst zumindest ein im Bodensegment 20 angeordnetes Verschlusselement 23, welches dazu eingerichtet ist, sich zwischen zwei Positionen zu bewegen, in welchen das zumindest eine Verschlusselement 23 zumindest eine Ausschleuseöffnung 24 freigibt oder verschließt. Das zumindest eine Verschlusselement 23 ist in der die zumindest eine Ausschleuseöffnung 24 verschließenden Position strichliniert dargestellt.

Das zumindest eine Verschlusselement 23 kann als ein klappenförmiges Bauteil ausgeführt sein, welches bezüglich einer Drehachse 25 positionsveränderbar ist. Das zumindest eine Verschlusselement 23 ist um die Drehachse 25 schwenkbar angeordnet. Dazu ist das zumindest eine Verschlusselement 23 an der Drehachse 25 angelenkt.

Das zumindest eine Verschlusselement 23 ist durch ein Federelement 26 mit einer Vorspannkraft beaufschlagt, um das zumindest eine Verschlusselement 23 in seiner die zumindest eine Ausschleuseöffnung 24 verschließenden Position zu halten. Das Federelement 26 kann als ein mechanisches oder pneumatisches Federelement ausgeführt sein.

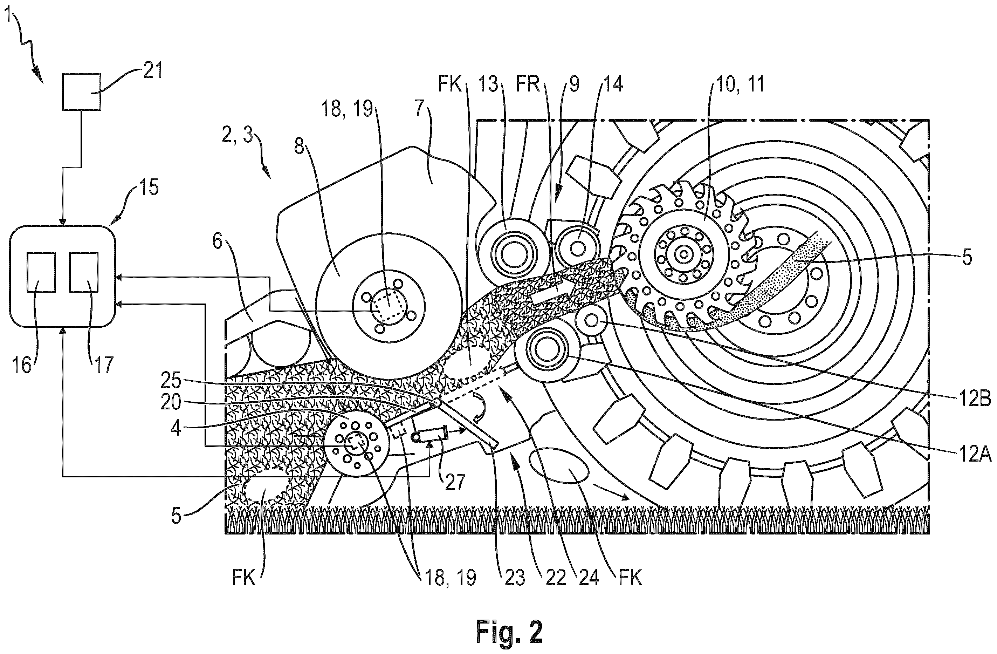

Alternativ kann die Abscheidevorrichtung 22 durch zumindest einen Aktuator 27 aktiv betätigbar sein, wie in Fig. 2 schematisch dargestellt. Fig. 2 stellt schematisch und exemplarisch eine Teilansicht der landwirtschaftlichen Erntemaschine gemäß Fig. 1 mit einer aktiv betätigbaren Abscheidevorrichtung dar. Der grundsätzliche Aufbau der Erntemaschine 1, des Vorsatzgerätes 2 sowie der Fremdkörperdetektionseinrichtung 15 ist identisch mit dem anhand der Fig. 1 beschriebenen Ausführungsform, so dass nur für abweichende und oder neue Komponenten neue Bezugszeichen eingeführt werden.

Der die Abscheidevorrichtung 22 betätigende Aktuator 27 kann als elektromechanischer, hydraulischer oder pneumatischer Aktor ausgeführt sein. Beispielhaft ist der Aktuator 27 als Hydraulikzylinder oder Pneumatikzylinder ausgeführt. Mittels des Aktuators 27 wird das zumindest eine Verschlusselement 23 in seiner die zumindest eine Ausschleuseöffnung 24 verschließenden Position gehalten. Wird von der Fremdkörperdetektionseinrichtung 15 ein Fremdkörper FK im Vorsatzgerät erkannt, wird hier und vorzugsweise durch die Fremdkörperdetektionseinrichtung 15 der Aktuator 27 angesteuert, um die Ausschleuseöffnung 24 durch Verschwenken des zumindest einen Verschlusselementes 23 temporär freizugeben.

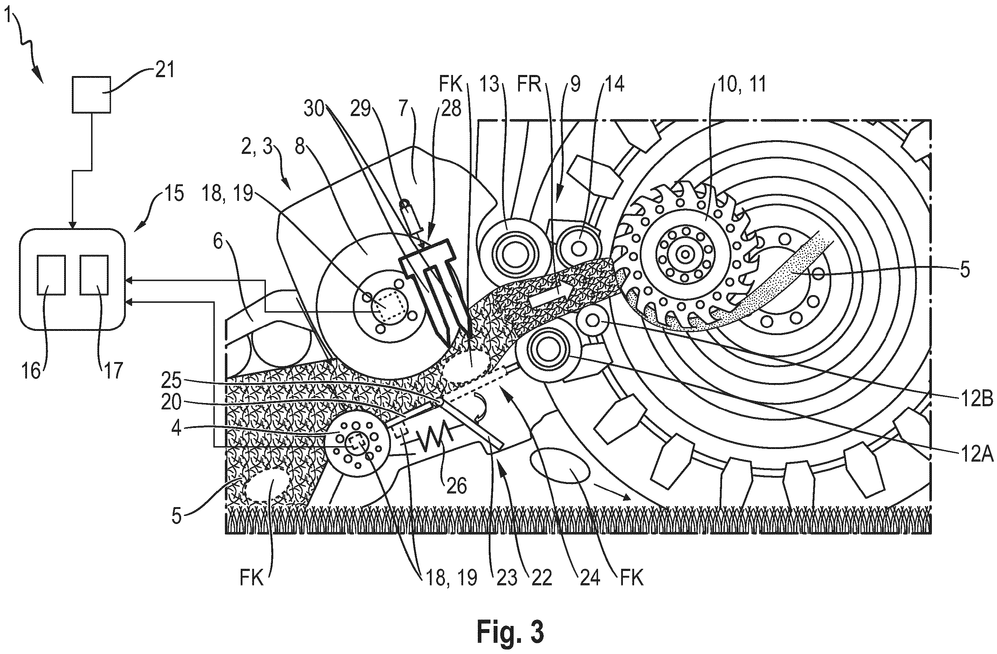

Die Darstellung in Fig. 3 zeigt schematisch und exemplarisch eine Teilansicht der landwirtschaftlichen Erntemaschine 1 gemäß Fig. 1 mit einer die passiv betätigbare Abscheidevorrichtung 22 unterstützenden Ausstoßvorrichtung 28. Bevorzugt kann die Ausstoßvorrichtung 28 an einem dem zumindest einen Verschlusselement 23 gegenüberliegenden Abschnitt des Gehäuses 7 eine angeordnet. Mittels der Ausstoßvorrichtung 28 kann auf den Fremdkörper eingewirkt werden, um diesen gegen das zumindest eine Verschlusselement 23 zu dessen Betätigung durch den Fremdkörper FK zu drücken.

Die Ausstoßvorrichtung 28 umfasst zumindest einen Linearaktor 29, der eine in Richtung des zumindest einen Verschlusselementes 23 gerichtete Bewegung ausführt. Insbesondere ist dabei vorgesehen, dass die von der Ausstoßvorrichtung 28 zurücklegbare Wegstrecke derart gewählt ist, dass ein unmittelbarer Kontakt zwischen dem zumindest einen Verschlusselement 23 und der Ausstoßvorrichtung 28 vermieden wird. Die maximal zurücklegbare Wegstrecke der Ausstoßvorrichtung 28 ist durch das Erreichen der Ausschleuseöffnung 24 begrenzt.

Bevorzugt weist die Ausstoßvorrichtung 28 zumindest eine Zinkenreihe 30 auf, welche sich im Wesentlichen über die Breite des Gehäuses 7 des Vorsatzgerätes 2 erstreckt. Die Ausführung der Ausstoßvorrichtung 28 mit zumindest einer Zinkenreihe 30 hat den Vorteil, dass die einzelnen Zinken das Erntegut 5 durchstoßen können, wodurch der Anteil an Erntegut 5, welches mit dem Fremdkörper FK ausgeschleust wird, minimiert werden kann. Dies ist besonders vorteilhaft, wenn mehrere Verschlusselemente 23, unabhängig von einer passiven oder aktiven Betätigung, vorgesehen sind, die unabhängig voneinander betätigbar sind, um eine im Wesentlichen auf die Größe des Fremdkörpers FK begrenzte Ausschleuseöffnung 24 freizugeben.

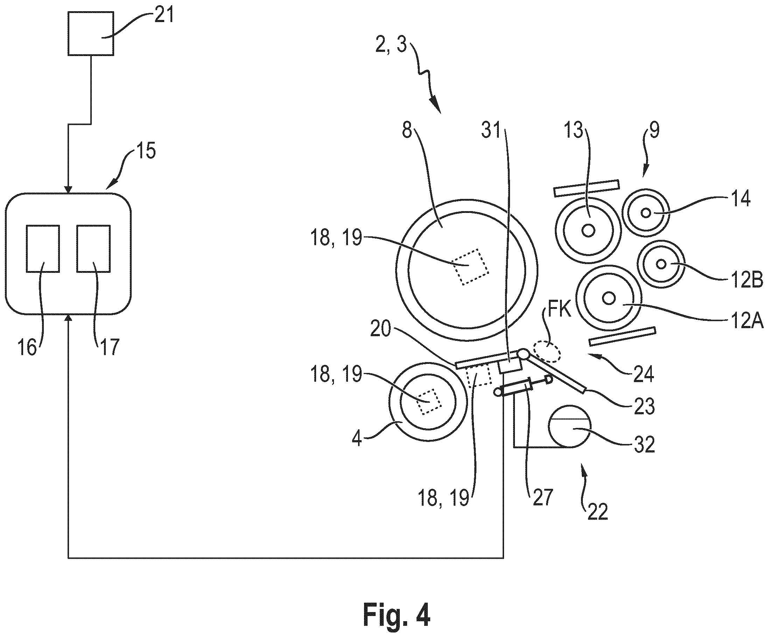

In Fig. 4 ist schematisch und exemplarisch eine stark vereinfachte Darstellung des Vorsatzgerätes 2 mit aktiv betätigbarer Abscheidevorrichtung 22 dargestellt. Gemäß einer bevorzugten Weiterbildung kann dem zumindest einen Verschlusselement 23 der Abscheidevorrichtung 22 zumindest eine Sensoreinheit 31 zugeordnet sein, welche zur Detektion einer Positionsänderung des zumindest einen Verschlusselementes 23 eingerichtet ist. Die Erfassung der Positionsänderung des zumindest einen Verschlusselementes 23 durch dessen aktive Betätigung wird durch die Recheneinheit 16 der Fremdkörperdetektionseinrichtung 15 ausgewertet, indem die zumindest eine Sensoreinheit 31 entsprechende Sensorsignale zur Auswertung an die Recheneinheit 16 überträgt. Dazu kann die zumindest eine Sensoreinheit 31 dazu ausgeführt und eingerichtet sein, einen Öffnungswinkel des zumindest einen Verschlusselementes 23 zu detektieren. Alternativ oder zusätzlich kann die zumindest eine Sensoreinheit 31 dazu ausgeführt und eingerichtet sein, einen Druck in dem als Hydraulikzylinder oder Pneumatikzylinder ausgeführten Aktuator 27 zu detektierten.

Gemäß einer bevorzugten Weiterbildung kann die Fremdkörperdetektionseinrichtung dazu ausgeführt und eingerichtet sein, alternativ oder zusätzlich zur Detektion des Fremdkörpers FK die Betätigung des zumindest eine Verschlusselementes 23 georeferenziert aufzuzeichnen.

Bevorzugt kann die durch den zumindest einen Aktuator 27 aktiv betätigbare Abscheidevorrichtung 22 zudem mit einem Überlastschutz ausgeführt sein. Dabei kann der Überlastschutz passiv ausgeführt sein, beispielsweise als Druckregelventil, insbesondere als Druckbegrenzungsventil. Eine alternative Ausführungsform ist in Fig. 4 dargestellt, wobei als Überlastschutz des zumindest einen Aktuators 27 ein eine Vorspannung erzeugender Druckspeicher 32 vorgesehen ist.

Wie weiter aus Fig. 4 ersichtlich, kann vorgesehen sein, dass das zumindest eine Verschlusselement 23 entgegen der Vorwärtsfahrtrichtung der Erntemaschine 1 öffnet. Dabei ist wesentlich, dass die Ausschleusung des Fremdkörpers FK vor dem Erreichen der Einzugvorrichtung 9 erfolgt.

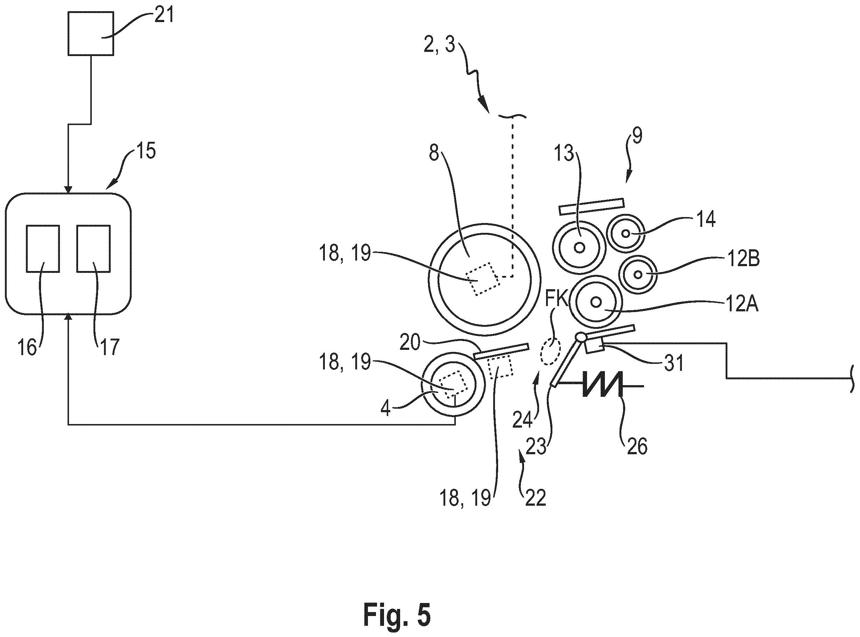

Die Darstellung in Fig. 5 zeigt schematisch und exemplarisch eine stark vereinfachte Darstellung des Vorsatzgerätes 2 mit passiv betätigbarer Abscheidevorrichtung 22. Wie im Kontext mit Fig. 1 bereits ausgeführt, ist das zumindest eine passiv betätigbare Verschlusselement 23 durch das Federelement 26 mit einer Vorspannkraft beaufschlagt, um das zumindest eine Verschlusselement 23 in seiner die zumindest eine Ausschleuseöffnung 24 verschließenden Position zu halten. Im Unterschied zu der Ausführung gemäß Fig. 1 öffnet das zumindest eine Verschlusselement 23 in Vorwärtsfahrtrichtung der Erntemaschine 1. Diese Ausbildung des zumindest einen Verschlusselementes 23 ist in gleicher Weise auf die aktive Betätigung durch den zumindest einen Aktuator 27 übertragbar.

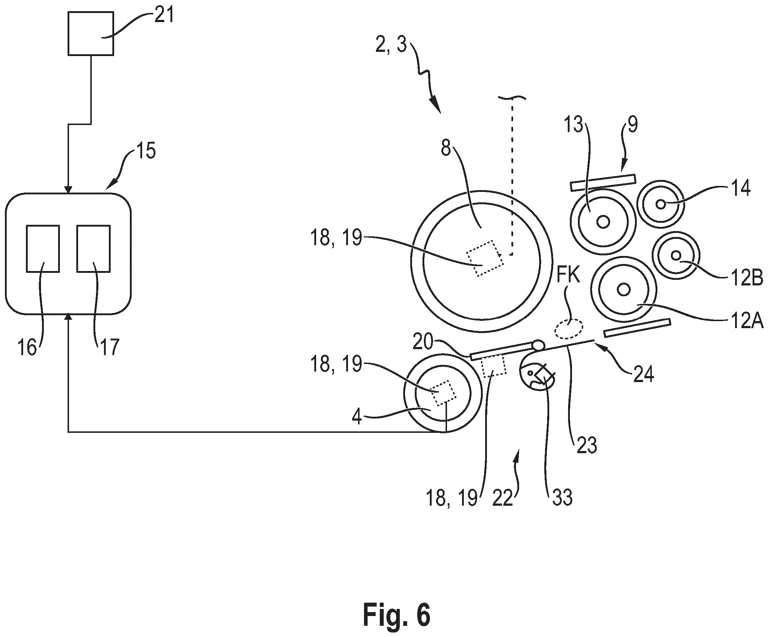

In Fig. 6 ist schematisch und exemplarisch eine stark vereinfachte Darstellung des Vorsatzgerätes 2 mit einer passiv betätigbarer Abscheidevorrichtung 22 gemäß einer Ausführungsform dargestellt. Gemäß der dargestellten Ausführungsform besteht das zumindest eine Verschlusselement 23 der Abscheidevorrichtung 22 zumindest abschnittsweise aus einem verformbaren, insbesondere elastisch verformbaren, Material. Dabei ist das zumindest eine Verschlusselement 23 dazu ausgebildet und eingerichtet, sich zum Freigeben und Verschließen der zumindest einen Ausschleuseöffnung 24 reversibel zu verformen. Gemäß dieser einer Ausführungsform vereinen die Verschlusselemente 23 die Funktion des Freigebens und des Verschließens der zumindest einen Ausschleuseöffnung 24 sowie das Generieren einer Vorspannkraft, um zu verhindern, dass Erntegut 5 unbeabsichtigt abgeschieden wird.

Hierzu können mehrere aus einem Federstahl oder einem anderen elastisch verformbaren Material bestehende Verschlusselemente 23 an einem Träger 33 befestigt sein. Der Träger 33 erstreckt sich in Querrichtung des Vorsatzgerätes 2 im Wesentlichen über dessen gesamte Breite. Die aus einem Federstahl oder dergleichen bestehenden Verschlusselemente 23 sind nebeneinander an dem Träger 33 angeordnet und bilden eine im Wesentlichen geschlossene Oberfläche aus, welche die Ausschleuseöffnung 24 verschließen. Trifft ein Fremdkörper FK auf einige der Verschlusselemente 23, werden diese durch den Fremdkörper FK in der Weise verformt, dass die Ausschleuseöffnung 24 abschnittsweise freigegeben wird. Nachdem der Fremdkörper FK den freigegebenen Abschnitt der Ausschleuseöffnung 24 passiert hat, federn die durch den Fremdkörper FK verformten Verschlusselemente 23 in ihre Ausgangslage zurück, so dass die Ausschleuseöffnung 24 wieder verschlossen ist.

Auch diese Ausführungsform kann, wie beispielhaft in Fig. 3 dargestellt, mit einer die passiv betätigbare Abscheidevorrichtung 22 unterstützenden Ausstoßvorrichtung 28 ausgeführt sein.

### Bezugszeichenliste

| | | | |
|---|---|---|---|
| 1 | Erntemaschine | 33 | Träger |
| 2 | Vorsatzgerät | | |
| 3 | Aufnahmevorrichtung | FK | Fremdkörper |
| 4 | Aufsammeltrommel | FR | Förderrichtung |
| 5 | Erntegut | | |
| 6 | Niederhalter | | |
| 7 | Gehäuse | | |
| 8 | Förderschnecke | | |
| 9 | Einzugvorrichtung | | |
| 10 | Arbeitsaggregat | | |
| 11 | Häckseltrommel | | |
| 12A | Einzugwalze | | |
| 12B | Einzugwalze | | |
| 13 | Vordere Presswalze/Vorpresswalze | | |
| 14 | Hintere Presswalze | | |
| 15 | Fremdkörperdetektionseinrichtung | | |
| 16 | Recheneinheit | | |
| 17 | Speichereinheit | | |
| 18 | Sensor | | |
| 19 | Mikrofon | | |
| 20 | Bodensegment | | |
| 21 | Positionsortungssensor | | |
| 22 | Abscheidevorrichtung | | |
| 23 | Verschlusselement | | |
| 24 | Ausschleuseöffnung | | |
| 25 | Drehachse | | |
| 26 | Federelement | | |
| 27 | Aktuator | | |
| 28 | Ausstoßvorrichtung | | |
| 29 | Linearaktor | | |
| 30 | Zinkenreihe | | |
| 31 | Sensoreinheit | | |
| 32 | Druckspeicher | | |

## Patentansprüche

1. Landwirtschaftliche Erntemaschine (1), umfassend eine in einem Einzuggehäuse angeordnete Einzugvorrichtung (9), ein an dem Einzuggehäuse angeordnetes Vorsatzgerät (2) zur Aufnahme von Erntegut, wobei das Vorsatzgerät (2) ein einen Erntegutfluss begrenzendes Gehäuse (7) mit einem Bodensegment (20) aufweist, sowie zumindest ein der Einzugvorrichtung (6) nachgeordnetes Arbeitsaggregat (10), **dadurch gekennzeichnet, dass** dem Vorsatzgerät (2) eine Fremdkörperdetektionseinrichtung (15) zugeordnet ist, welche dazu ausgeführt und eingerichtet ist, Fremdkörper (FK) im Gutstrom innerhalb des Vorsatzgerätes (2) zu detektieren, wobei das Vorsatzgerät (2) eine fremdkraftbetätige Abscheidevorrichtung (22) zur Ausschleusung des detektieren Fremdkörpers (FK) umfasst.

2. Erntemaschine (1) nach Anspruch 1, **dadurch gekennzeichnet, dass** die Abscheidevorrichtung (22) passiv durch den auszuschleusenden Fremdkörper (FK) oder aktiv durch zumindest einen Aktuator (27) betätigbar ist.

3. Erntemaschine (1) nach Anspruch 1 oder 2, **dadurch gekennzeichnet, dass** die Abscheidevorrichtung (22) zumindest ein im Bodensegment (20) angeordnetes Verschlusselement (23) umfasst, welches dazu eingerichtet ist, sich zwischen zwei Positionen zu bewegen, in welchen das zumindest eine Verschlusselement (23) zumindest eine Ausschleuseöffnung (24) freigibt oder verschließt.

4. Erntemaschine (1) nach Anspruch 3, **dadurch gekennzeichnet, dass** das zumindest eine Verschlusselement (23) durch zumindest ein Federelement (26) mit einer Vorspannkraft beaufschlagt ist, um das zumindest eine Verschlusselement (23) in seiner die zumindest eine Ausschleuseöffnung (24) verschließenden Position zu halten.

5. Erntemaschine (1) nach Anspruch 4, **dadurch gekennzeichnet, dass** das zumindest eine Federelement (26) als ein mechanisches oder pneumatisches Federelement ausgeführt ist.

6. Erntemaschine (1) nach Anspruch 3, **dadurch gekennzeichnet, dass** das zumindest eine Verschlusselement (23) zumindest abschnittsweise aus einem verformbaren, insbesondere elastisch verformbaren, Material ausgebildet und dazu eingerichtet ist, sich zum Freigeben und Schließen der zumindest einen Ausschleuseöffnung (24) zu verformen.

7. Erntemaschine (1) nach Anspruch 2 oder 3, **dadurch gekennzeichnet, dass** der die Abscheidevorrichtung (22) betätigende Aktuator (27) als elektromechanischer, hydraulischer oder pneumatischer Aktor ausgeführt ist.

8. Erntemaschine (1) nach einem der Ansprüche 3 bis 7, **dadurch gekennzeichnet, dass** an einem dem im Bodensegment (20) angeordneten zumindest einen Verschlusselement (23) gegenüberliegenden Abschnitt des Gehäuses (7) eine Ausstoßvorrichtung (28) angeordnet ist, welche auf den Fremdkörper (FK) einwirkt.

9. Erntemaschine (1) nach Anspruch 8, **dadurch gekennzeichnet, dass** die Ausstoßvorrichtung (28) zumindest einen Linearaktor (29) umfasst, der eine in Richtung des zumindest einen Verschlusselementes (23) gerichtete Bewegung ausführt.

10. Erntemaschine (1) nach Anspruch 8 oder 9, **dadurch gekennzeichnet, dass** die Ausstoßvorrichtung (28) zumindest eine Zinkenreihe (30) aufweist, welche sich im Wesentlichen über die Breite des Gehäuses (7) erstreckt.

11. Erntemaschine (1) nach einem der Ansprüche 3 bis 10, **dadurch gekennzeichnet, dass** dem zumindest einen Verschlusselement (23) zumindest eine Sensoreinheit (31) zugeordnet ist, welche zur Detektion einer Positionsänderung des zumindest einen Verschlusselementes (23) eingerichtet ist.

12. Erntemaschine (1) nach einem der Ansprüche 3 bis 11, **dadurch gekennzeichnet, dass** die Fremdkörperdetektionseinrichtung (15) dazu ausgeführt und eingerichtet ist, eine Detektion eines Fremdkörpers (FK) und/oder eine Betätigung des zumindest eine Verschlusselementes (23) georeferenziert aufzuzeichnen.

13. Erntemaschine (1) nach einem der vorangehenden Ansprüche, **dadurch gekennzeichnet, dass** die Fremdkörperdetektionseinrichtung (15) zumindest einen Sensor (18) aufweist, der als Mikrofon (19) und/oder als Körperschallsensor ausgeführt ist.

14. Erntemaschine (1) nach einem der vorangehenden Ansprüche, **dadurch gekennzeichnet, dass** der zumindest eine Sensor (18) an und/oder in einem Bauteil des Vorsatzgerätes (2) angeordnet ist, wobei das Bauteil als Resonanzkörper dient.

15. Erntemaschine (1) nach einem der vorangehenden Ansprüche, **dadurch gekennzeichnet, dass** der zumindest eine Sensor (15) außenseitig am Gehäuse (7) und/oder Rahmen des Vorsatzgerätes (2) angeordnet ist.
